# EUROPÄISCHE PATENTANMELDUNG

(11) **EP 2 551 134 A1**
(43) Veröffentlichungstag der Anmeldung: **30.01.2013**
(21) Anmeldenummer: 11290345.5
(22) Anmeldetag: 28.07.2011
(51) Int. Cl.: B60H 1/22, F24F 13/14

(54) **Vorrichtung zum Einstellen und Heizen eines Fluidstroms und Ausströmer**

(71) Anmelder: Behr France Rouffach SAS, 68250 Rouffach (FR)
(72) Erfinder: De Guibert, Matthieu, 74960 Cran Gevrier (FR)
(74) Vertreter: Grauel, Andreas

(57) **Zusammenfassung**

Die vorliegende Erfindung betrifft eine Vorrichtung (100) zum Einstellen und Heizen eines Fluidstroms in einem Fluidkanal (200), wobei die Vorrichtung (100) eine Klappe (102) aufweist, die im Fluidkanal (200) quer zu einer Haupterstreckungsrichtung des Fluidkanals (200) drehbar angeordnet ist. Die Klappe (102) ist dazu ausgebildet, in einer ersten Winkelstellung den Fluidstrom zu unterbrechen, und in einer zweiten Winkelstellung den Fluidstrom zu ermöglichen. Weiterhin weist die Vorrichtung ein für den Fluidstrom durchlässiges Heizregister (104) auf, das mit der Klappe (102) verbunden ist, und unter einem Winkel zu der Klappe (102) ausgerichtet ist. Das Heizregister (104) ist dazu ausgebildet, in der zweiten Winkelstellung den Fluidstrom zu heizen.

## Beschreibung

Die vorliegende Erfindung bezieht sich auf eine Vorrichtung zum Einstellen und Heizen eines Fluidstroms in einem Fluidkanal sowie auf einen Ausströmer.

In einer herkömmlichen Fahrzeugklimaanlage wird Luft auf eine einheitliche Temperatur gebracht und durch verschiedene Kanäle zu Düsen im Fahrzeuginnenraum geleitet. Dadurch ergibt sich eine gleichmäßige Temperaturverteilung im Innenraum.

Es ist die Aufgabe der vorliegenden Erfindung eine verbesserte Vorrichtung zum Einstellen und Heizen eines Fluidstroms in einem Fluidkanal sowie einen verbesserten Ausströmer zu schaffen.

Diese Aufgabe wird durch eine Vorrichtung zum Einstellen und Heizen eines Fluidstroms in einem Fluidkanal sowie einen Ausströmer gemäß den Hauptansprüchen gelöst.

Im Innenraum eines Fahrzeugs existieren Bereiche mit speziellen Anforderungen an Wärme und/oder Kälte. Beispielsweise benötigt eine Scheibenheizung eine hohe Temperatur, während an einem zentralen Ausströmer ein geringeres Temperaturniveau vorteilhaft ist, während an einem Fußausströmer wieder ein hohes Temperaturniveau gefragt sein kann.

Der vorliegenden Erfindung liegt die Erkenntnis zugrunde, dass für jeden Ausströmer individuell die Temperatur von einem allgemeinen Temperaturniveau angehoben werden kann, wenn in den Luftstrom durch den Ausströmer eine Heizung eingeschwenkt werden kann.

Vorteilhafterweise kann durch individuell einstellbare Temperaturen an den Ausströmern eine hohe Modularität der Temperaturverteilung im Fahrzeuginnenraum und eine Komfortverbesserung für Fahrzeuginsassen erreicht werden.

Die vorliegende Erfindung schafft eine Vorrichtung zum Einstellen und Heizen eines Fluidstroms in einem Fluidkanal, wobei die Vorrichtung die folgenden Merkmale aufweist:
eine Klappe, die im Fluidkanal quer zu einer Haupterstreckungsrichtung des Fluidkanals drehbar angeordnet ist, wobei die Klappe dazu ausgebildet ist, in einer ersten Winkelstellung den Fluidstrom zu unterbrechen, und in einer zweiten Winkelstellung den Fluidstrom zu ermöglichen; und
ein für den Fluidstrom durchlässiges Heizregister, das mit der Klappe verbunden ist, und unter einem Winkel zu der Klappe ausgerichtet ist, wobei das Heizregister dazu ausgebildet ist, in der zweiten Winkelstellung den Fluid des Fluidstroms zu heizen.

Ein Fluidkanal kann ein Rohr sein. Unter einer Klappe kann ein Sperrkörper in dem Fluidkanal zum Unterbrechen eines Fluidstroms in dem Fluidkanal verstanden werden. Die Klappe kann von außerhalb des Fluidkanals bedient werden. Eine Flussrichtung des Fluidstroms kann in der Haupterstreckungsrichtung des Fluidkanals ausgerichtet sein. Eine erste Winkelstellung der Klappe kann quer zu der Haupterstreckungsrichtung ausgerichtet sein, eine zweite Winkelstellung kann senkrecht zu der ersten Winkelstellung ausgerichtet sein. Unter einem Heizregister kann ein Wärmeübertrager verstanden werden, der dazu ausgebildet ist, Wärmeenergie an ein im Fluidstrom strömendes Fluid abzugeben. Das Heizregister kann quer zu der Klappe ausgerichtet sein. In der zweiten Winkelstellung kann das Heizregister dazu ausgebildet sein, den Fluidkanal zu überspannen.

Die Klappe kann eine Drehachse aufweisen, die in dem Fluidkanal drehbar gelagert ist, wobei das Heizregister an der Drehachse angeordnet ist. Die Drehachse kann in einem Kreuzungsbereich zwischen der Klappe und dem Heizregister angeordnet sein. Die Drehachse kann durch zumindest eine Wand des Fluidkanals ragen. Durch die Drehachse kann das Heizregister und die Klappe von außerhalb des Fluidkanals bedient werden.

Die Drehachse kann dazu ausgebildet sein, Versorgungsleitungen des Heizregisters aus dem Fluidkanal zu führen. Dazu kann die Drehachse beispielsweise hohl ausgeführt sein. Die Versorgungsleitungen können über eine Drehverbindung torsionsfrei geführt werden.

Die Drehachse kann zumindest zwei Schleifringe zur Kontaktierung der Versorgungsleitungen aufweisen, die außerhalb des Luftkanals angeordnet sind. Die Schleifringe können über Kohlebürsten kontaktiert werden und elektrische Energie für das Heizregister bereitstellen oder übertragen.

Die Schleifringe können dazu ausgebildet sein, in der ersten Winkelstellung die Versorgungsleitungen zu unterbrechen. Die Schleifringe können dazu zumindest eine Unterbrechung aufweisen. Wenn die Kohlebürsten in der Unterbrechung angeordnet sind kann die Versorgungsleitung unterbrochen sein. Dadurch kann das Heizregister beispielsweise bei geschlossener Klappe gegen Überhitzen geschützt sein.

Die Drehachse kann mittig in der Klappe und/oder mittig in dem Heizregister angeordnet sein. Durch eine symmetrische Anordnung von zwei Bereichen der Klappe und zwei Bereichen des Heizregisters auf jeweils gegenüberliegenden Seiten der Drehachse kann eine Belastung durch den Fluidstrom ausbalanciert werden. Dadurch kann die Klappe leicht betätigt werden.

Das Heizregister kann je eine separat steuerbare Heizfläche auf gegenüberliegenden Seiten der Drehachse aufweisen. Beispielsweise kann nur eine Heizfläche beheizt werden, wodurch ein Wärmeeintrag in den Fluidstrom halbiert wird. Dadurch können Heizelemente energieeffizient verwendet werden, da sie trotz geringerem Wärmebedarf in einem optimierten Betriebspunkt betrieben werden können.

Das Heizregister kann zumindest einen elektrischen Widerstand und Rippen zur Wärmeübertragung von dem elektrischen Widerstand auf den Fluidstrom aufweisen. Ein elektrischer Widerstand kann ein Kaltleiter sein. Bei Stromfluss durch den Widerstand kann der Widerstand Wärme abgeben. Eine Wärmemenge pro Zeiteinheit kann abhängig von einer Strommenge in der Zeiteinheit sein. Rippen können eine Oberfläche für den Wärmeübergang zwischen dem elektrischen Widerstand und dem Fluidstrom vergrößern.

Weiterhin schafft die vorliegende Erfindung einen Ausströmer mit folgenden Merkmalen:
Einer Vorrichtung zum Einstellen und Heizen gemäß dem hier vorgestellten Ansatz; und
einem Fluidkanal, der im Bereich der Vorrichtung einen größeren Querschnitt aufweist, als in Strömungsrichtung vor und/oder hinter der Vorrichtung.

Unter einem Ausströmer kann ein Kanal von einer Klimaanlage zu einer (Auslass-) Düse der Klimaanlage verstanden werden.

Der Fluidkanal kann im Bereich der Vorrichtung zumindest einen Anschlag für die Klappe und/oder das Heizregister aufweisen. Durch einen Anschlag kann die Klappe und/oder das Heizregister eine definierte Endlage einnehmen.

Die Klappe kann in der ersten Winkelstellung an dem Anschlag anliegen. Alternativ oder ergänzend kann das Heizregister in der zweiten Winkelstellung an dem Anschlag anliegen. Die Klappe kann auf einer ersten Seite des Anschlags anliegen. Das Heizregister kann auf einer gegenüberliegenden Seite des Anschlags anliegen. Dadurch kann der Anschlag einen Winkelarbeitsbereich der Klappe und alternativ oder ergänzend des Heizregisters definieren.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine räumliche Darstellung einer Vorrichtung zum Einstellen und Heizen eines Fluidstroms gemäß einem Ausführungsbeispiel der vorliegenden Erfindung;
- Fig. 2: eine Darstellung einer Vorrichtung zum Einstellen und Heizen eines Fluidstroms in einem Fluidkanal gemäß einem Ausführungsbeispiel der vorliegenden Erfindung in einer geöffneten Winkelstellung;
- Fig. 3: eine Darstellung einer Vorrichtung zum Einstellen und Heizen eines Fluidstroms in einem Fluidkanal gemäß einem Ausführungsbeispiel der vorliegenden Erfindung in einer Zwischenstellung; und
- Fig. 4: eine Darstellung einer Vorrichtung zum Einstellen und Heizen eines Fluidstroms in einem Fluidkanal gemäß einem Ausführungsbeispiel der vorliegenden Erfindung in einer geschlossenen Winkelstellung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

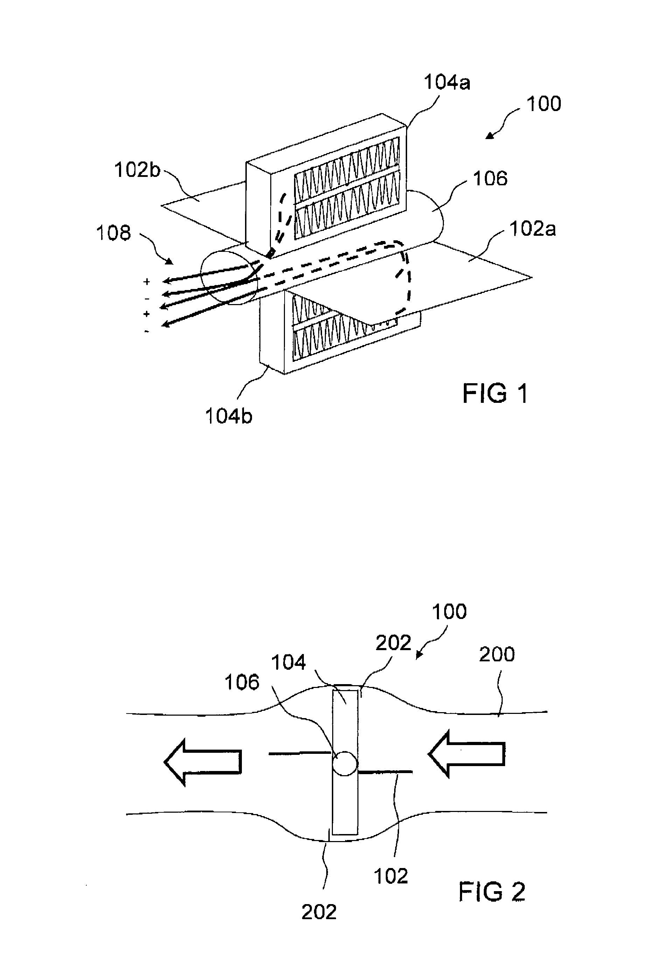

Fig. 1 zeigt eine räumliche Darstellung einer Vorrichtung 100 zum Einstellen und Heizen eines Fluidstroms gemäß einem Ausführungsbeispiel der vorliegenden Erfindung. Die Vorrichtung 100 weist eine Klappe 102 zum Einstellen, ein Heizregister 104 zum Heizen und eine Drehachse 106 zum Drehen der Vorrichtung 100 auf. Die Drehachse 106 ist ferner dazu ausgebildet Versorgungsleitungen 108 für das Heizelement 104 im Inneren der 106 Drehachse aufzunehmen. Die Klappe 102 weist einen ersten Teilbereich 102a und einen gleichgroßen zweiten Teilbereich 102b auf. Zwischen den beiden Teilbereichen 102a, 102b ist die Drehachse 106 angeordnet. Die Teilbereiche 102a, 102b weisen in diesem Ausführungsbeispiel eine rechteckige Form auf. In einem anderen Ausführungsbeispiel können die Teilbereiche beispielsweise halbrund ausgeführt sein. Die Teilbereiche 102a, 102b sind tangential zu der Drehachse 106 ausgerichtet und an diametral gegenüberliegenden Verbindungsbereichen mit der Drehachse 106 verbunden. Das Heizregister 104 weist ebenso einen ersten Teilbereich 104a und einen gleichgroßen zweiten Teilbereich 104b auf. Die Drehachse 106 ist zwischen dem ersten Teilbereich 104a und dem zweiten Teilbereich 104b angeordnet. Die Teilbereiche 104a, 104b sind radial zu der Drehachse 106 ausgerichtet und ebenfalls an den Verbindungsbereichen mit der Drehachse 106 verbunden. Eine Haupterstreckungsebene des Heizregisters 104 ist senkrecht zu Haupterstreckungsebenen der Teilbereiche 102a, 102b der Klappe 102 ausgerichtet. Die Teilbereiche 104a, 104b des Heizregisters 104 weisen in diesem Ausführungsbeispiel je ein elektrisches Heizelement auf. Das Heizelement kann ein PTC-Element sein. Ein Kabelausgang kann durch die Drehachse 106 verlaufen- In einem anderen Ausführungsbeispiel können die Teilbereiche 104a, 104b eine Mehrzahl von Heizelementen aufweisen. Weiterhin weisen Teilbereiche 104a, 104b einen Rahmen auf, der an einer von vier Seiten verbreitert ausgeführt ist, um das elektrische Heizelement mit zwei der vier Versorgungsleitungen 108 aus der Drehachse 106 zu verbinden. Das Heizelement ist senkrecht zu der verdickten Seite mittig im Rahmen ausgerichtet. Das Heizelement ist parallel zu der Drehachse 106 ausgerichtet. Zwischen dem Heizelement und dem Rahmen sind Wellrippen angeordnet, die dazu ausgebildet sind, Wärme von dem Heizelement auf einen, durch Zwischenräume zwischen den Wellrippen fließenden, Fluidstrom zu übertragen. Die Drehachse 106 steht beidseitig über das Heizregister 104 und die Klappe 102 über. In einem anderen Ausführungsbeispiel kann die Drehachse Schleifringe aufweisen, auf die beispielsweise Kohlebürsten elektrische Energie für das Heizregister übertragen können.

Fig. 2 zeigt eine Darstellung eines Ausströmers mit einer Vorrichtung 100 zum Einstellen und Heizen eines Fluidstroms in einem Fluidkanal 200 gemäß einem Ausführungsbeispiel der vorliegenden Erfindung. Die Vorrichtung 100 entspricht der Vorrichtung aus Fig. 1. Die Vorrichtung 100 ist sich in einer geöffneten Winkelstellung dargestellt. Die Klappe 102 ist auf, der PTC kann gesteuert werden. In diesem Ausführungsbeispiel ist der Fluidkanal 200 ein Luftkanal. In Strömungsrichtung vor der Vorrichtung 100 strömt in dem Luftkanal 200 kalte Luft. In Strömungsrichtung nach der Vorrichtung 100 strömt in dem Luftkanal 200 warme Luft, die von dem Heizregister erwärmt worden ist. Die Vorrichtung 100 ist in dem Luftkanal 200 um die Drehachse 106 drehbar angeordnet. Die Drehachse ist mittig im Luftkanal 200 quer zu dem Luftkanal 200 angeordnet. Der Luftkanal 200 weist im Bereich der Vorrichtung 100 eine Verbreiterung auf. Die Verbreiterung ist strömungsgünstig ausgeführt und bildet näherungsweise einen Flugkreis der Klappe 102 und des Heizregisters 104 ab. Auf Höhe der Vorrichtung 100 weist der Luftkanal 200 Anschläge 202 auf. In der dargestellten geöffneten Winkelstellung liegt der Rahmen der Teilbereiche des Heizregisters 104 an den Anschlägen 202 an und der Fluidstrom durch den Luftkanal 200 muss durch das Heizregister 104 strömen.

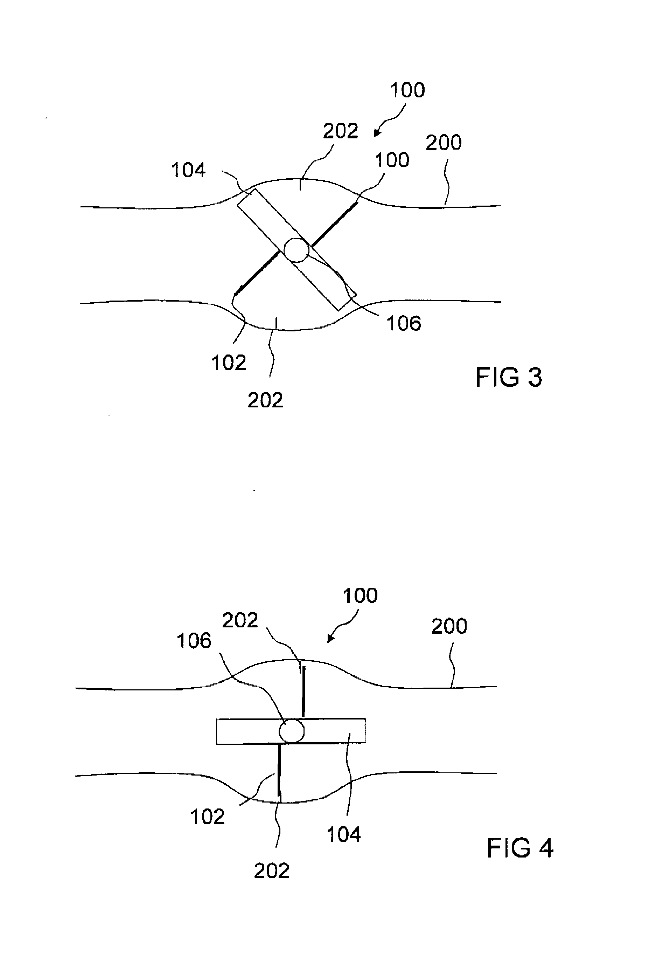

Fig. 3 zeigt eine Darstellung der Vorrichtung 100 zum Einstellen und Heizen eines Fluidstroms in einem Fluidkanal 200 aus Fig. 2 in einer teilgeöffneten Winkelstellung. Die Vorrichtung ist entsprechend einem Ausführungsbeispiel der vorliegenden Erfindung als Klappe 102 mit integriertem PTC ausgeführt. Gegenüber der geöffneten Winkelstellung aus Fig. 2 ist die Vorrichtung 100 hier um 45 Grad um die Drehachse 106 verdreht. Die Klappe 102 verengt einen Durchflussquerschnitt des Luftkanals 200. Ein Teil des noch strömenden Luftstroms kann seitlich an dem Heizregister 104 durch einen Spalt vorbeiströmen. Weder die Klappe 102 noch das Heizregister 104 liegen an den Anschlägen 202 an. In der teilgeöffneten Stellung kann der Luftstrom auf eine geringere Temperatur erwärmt werden, da kalte Luft seitlich am Heizregister 104 vorbei strömen kann und sich hinter dem Heizregister 104 mit dem Luftstrom durch das Heizregister 104 vermischt.

Fig. 4 zeigt eine Darstellung der Vorrichtung 100 zum Einstellen und Heizen eines Fluidstroms in einem Fluidkanal 200 aus Fig. 2 in einer geschlossenen Winkelstellung. Die Vorrichtung ist entsprechend einem Ausführungsbeispiel der vorliegenden Erfindung ausgeführt. Gegenüber der geöffneten Winkelstellung aus Fig. 2 ist die Vorrichtung 100 hier um 90 Grad um die Drehachse 106 verdreht. Die Klappe 102 liegt an den Anschlägen 202 an und verschließt den Luftkanal vollständig. Das Heizregister 104 ist deaktiviert, da kein Fluidstrom fließt, der erwärmt werden könnte. Dazu kann beispielsweise eine Schleifringverbindung auf der Drehachse 106 unterbrochen sein. Dann kann eine separate Abschaltung des PTC als Überhitzungsschutz entfallen, da über die unterbrochenen Schleifringe zwingend und winkelstellungsgeführt eine Zwangsabschaltung erfolgt.

Mit anderen Worten zeigen die Figuren 1 bis 4 eine HVAC-Klappe 102 (Heat Ventilate Air Condition) mit einem PTC (positive temperature coefficient) verbunden. Herkömmliche PTCs sind statisch in der KLA (Klimaanlage) oder in einem Luftkanal 200 angeordnet. Dadurch wird in der Klimaanlage die Luft insgesamt aufgewärmt. Der hier gezeigte Ansatz ermöglicht es, warme und kalte Luft aus zwei verschiedenen Ausblasdüsen gleichzeitig diffundieren zu lassen. Dadurch wird eine verbesserte Modularität erreicht. Es ergibt sich eine Multiplikation der Einstellungsmöglichkeiten der Innenraumtemperatur zur Komfortverbesserung für jeden Beifahrer. Dazu wird das PTC-Element in der Klappe 102 integriert und wird angesteuert, wenn die Klappe 102 auf ist. Wenn die Klappe 102 zu ist, wird das PTC-Element nicht gesteuert. Das hier vorgestellte System besteht aus einem mit der Klappe 102 verbundenen PTC-Modul 104. Das Heizregister 104 ist senkrecht zu der Klappe 102 fixiert und ist daher drehbar. Ein Steuergerät des PTCs kann fahrzeugfest verbaut sein. Die Ansteuerung des Heizregisters 104 kann durch bewegliche Kabel 108 oder Kohlebürsten erfolgen. Das Steuergerät kann auch im PTC-(Element) integriert sein und daher zu dem drehbaren Teil gehören. Durch den hier vorgestellten Ansatz kann eine höhere Modularität der Temperaturverteilung im Fahrzeuginnenraum erreicht werden.

Die beschriebenen Ausführungsbeispiele sind nur beispielhaft gewählt und können miteinander kombiniert werden.

### Bezugszeichenliste

- 100: Vorrichtung zum Einstellen und Heizen eines Fluidstroms
- 102: Klappe
- 104: Heizregister
- 106: Drehachse
- 108: Versorgungsleitungen
- 200: Fluidkanal
- 202: Anschlag

## Patentansprüche

1. Vorrichtung (100) zum Einstellen und Heizen eines Fluidstroms in einem Fluidkanal (200), wobei die Vorrichtung (100) die folgenden Merkmale aufweist:
eine Klappe (102), die im Fluidkanal (200) quer zu einer Haupterstreckungsrichtung des Fluidkanals (200) drehbar angeordnet ist, wobei die Klappe (102) dazu ausgebildet ist, in einer ersten Winkelstellung den Fluidstrom zu unterbrechen, und in einer zweiten Winkelstellung den Fluidstrom zu ermöglichen; und
ein für den Fluidstrom durchlässiges Heizregister (104), das mit der Klappe (102) verbunden ist, und unter einem Winkel zu der Klappe (102) ausgerichtet ist, wobei das Heizregister (104) dazu ausgebildet ist, in der zweiten Winkelstellung den Fluidstrom zu heizen.

2. Vorrichtung (100) gemäß Anspruch 1, bei der die Klappe (102) eine Drehachse (106) aufweist, die in dem Fluidkanal (200) drehbar gelagert ist, wobei das Heizregister (104) an der Drehachse (106) angeordnet ist.

3. Vorrichtung (100) gemäß Anspruch 2, bei der die Drehachse (106) dazu ausgebildet ist, Versorgungsleitungen (108) des Heizregisters (104) aus dem Fluidkanal (200) zu führen.

4. Vorrichtung (100) gemäß Anspruch 3, bei der die Drehachse (106) zumindest zwei Schleifringe für die Versorgungsleitungen (108) aufweist, die außerhalb des Fluidkanals (200) angeordnet sind.

5. Vorrichtung (100) gemäß Anspruch 4, bei der die Schleifringe dazu ausgebildet sind, in der ersten Winkelstellung die Versorgungsleitungen (108) zu unterbrechen.

6. Vorrichtung (100) gemäß einem der vorangegangenen Ansprüche, bei der die Drehachse (106) mittig in der Klappe (102) und mittig in dem Heizregister (104) angeordnet ist.

7. Vorrichtung (100) gemäß Anspruch 6, bei der das Heizregister (104) je eine separat steuerbare Heizfläche (104a, 104b) auf gegenüberliegenden Seiten der Drehachse (106) aufweist.

8. Vorrichtung (100) gemäß einem der vorangegangenen Ansprüche, bei der das Heizregister (104) zumindest einen elektrischen Widerstand (Kaltleiter) und Rippen zur Wärmeübertragung von dem elektrischen Widerstand auf den Fluidstrom aufweist.

9. Ausströmer mit folgenden Merkmalen:
Einer Vorrichtung (100) zum Einstellen und Heizen gemäß einem der Ansprüche 1 bis 8; und
einem Fluidkanal (200), der im Bereich der Vorrichtung (100) einen größeren Querschnitt aufweist, als in Strömungsrichtung vor und/oder hinter der Vorrichtung (100).

10. Ausströmer gemäß Anspruch 9, bei der der Fluidkanal (200) im Bereich der Vorrichtung (100) zumindest einen Anschlag (202) für die Klappe (102) und/oder das Heizregister (104) aufweist.

11. Ausströmer gemäß Anspruch 9, bei dem die Klappe (102) in der ersten Winkelstellung an dem Anschlag (202) anliegt und/oder das Heizregister (104) in der zweiten Winkelstellung an dem Anschlag (202) anliegt.
